# EUROPÄISCHE PATENTSCHRIFT

(11) **EP 0 528 104 B1**
(45) Veröffentlichungstag und Bekanntmachung des Hinweises auf die Patenterteilung: **08.11.1995**
(21) Anmeldenummer: 92104662.9
(22) Anmeldetag: 01.04.1992
(51) Int. Cl.: F16M 1/021, F02F 7/00, F02F 11/00

(54) **Gehäuseverschlussdeckel**
Casing closing cover
Couvercle de fermeture de carter

(30) Priorität: 16.08.1991 DE 4127067
(43) Veröffentlichungstag der Anmeldung: 24.02.1993
(73) Patentinhaber: CR Elastomere GmbH, D-51379 Leverkusen-Opladen (DE)
(72) Erfinder: Ecker, Rainer, Dipl.-Ing., W-5090 Leverkusen 3 (DE); vom Stein, Hans-Joachim, Dipl.-Ing., W-5632 Wermelskirchen (DE); Stephan, Bernd, Dipl.-Ing., W-5630 Remscheid 11 (DE)

(56) Entgegenhaltungen:
- DE-C- 3 634 735
- US-A- 2 764 136
- PATENT ABSTRACTS OF JAPAN, Band 5, Nr. 108 (M-78)(780), 14. Juli 1981; & JP-A-56 52 516 (AIDA ENGINEERING) 11-05-1981

## Beschreibung

Die Erfindung betrifft einen Gehäuseverschlußdeckel mit einer im Einbauzustand durch den Deckel sich erstreckenden Welle, insbesondere für Kurbelwellen- oder Getriebegehäuse von Kfz-Motoren, gemäß dem Oberbegriff des Anspruchs 1.

Die DE-C-36 34 735 offenbart einen gattungsgemäßen Verschlußdeckel. Der aus einem gezogenen Blechteil herausgeformte Verschlußdeckel weist einen im wesentlichen topfförmigen Querschnitt auf, mit drei in unterschiedlichen axialen Ebenen liegenden Radialflächen, welche stufenförmig zueinander versetzt sind.

Die statische Dichtung ist auf der zweiten Radialfläche angeordnet und mit dieser durch Vulkanisation verbunden. Im Einbauzustand wird der topfförmige Blechkörper mit der als Bodenfläche dienenden Radialfläche gegen das abzudichtende Gehäuse mit Hilfe von durch Löcher steckbare Schrauben verspannt.

Der mit der zweiten Radialfläche verbundene Dichtstreifen aus elastomerem Werkstoff steht zunächst axial so weit vor, daß die erste Radialfläche überragt wird. Beim Verspannen des Gehäuseverschlußdeckels wird der Dichtstreifen axial gegen das abzudichtende Gehäuse gepreßt. Damit der inkompressible Elastomer-Werkstoff ausweichen kann, muß ein Freiraum vorhanden sein. Dieser Freiraum wird durch die stufenförmige Versetzung der ersten und zweiten Radialfläche geschaffen, der Dichtstreifen kann sich somit radial nach innen ausdehnen. Bei der Montage des Gehäuseverschlußdeckels kann auf diese Weise die erste Radialfläche (Bodenfläche) fest an das abzudichtende Gehäuse angeschraubt werden, ohne daß die statische Dichtung zerstört wird.

Der Nachteil eines solchen profilgezogenen Blechkörpers liegt darin, daß beim Einbau des Gehäuseverschlußdeckels darauf geachtet werden muß, daß die Befestigungsschraube mit ihrem Schraubenkopf eine ebene Auflage besitzt, das heißt der Schraubenkopf darf nicht auf dem Übergangsbereich zwischen erster und zweiter Radialfläche liegen, da in diesem Fall durch das Festziehen der Übergangsbereich deformiert wird, wodurch wiederum der zum Ausweichen des Elastomermaterials notwendige Freiraum eingeschränkt wird. Um dies zu vermeiden, muß die Schraubendurchgangsbohrung des Gehäuseverschlußdeckels so weit radial nach außen verlegt sein, daß eine genormte Schraube mit ihrem Schraubenkopf gerade den Übergangsbereich zur zweiten Radialfläche nicht berührt. Es hat sich nun aber gezeigt, daß bei vielen Motoren der Einbauraum nicht groß genug ist, einen Gehäuseverschlußdeckel mit radial relativ weit nach außen verlegten Schraubendurchgangsbohrungen zur Anwendung gelangen zu lassen.

Der Erfindung liegt die Aufgabe zugrunde, einen gattungsgemäßen Gehäuseverschlußdeckel im Hinblick auf eine breite Anwendungsmöglichkeit derart zu verbessern, daß auch ein Einsatz bei Motoren mit engem Einbauraum möglich ist.

Diese Aufgabe wird erfindungsgemäß durch die Merkmale des Anspruchs 1 gelöst.

Durch Anordnung des Zusatzbleches auf der Bodenfläche, die im montierten Zustand dem Schraubenkopf zugekehrt ist, wird im Bereich der Schraubendurchgangsbohrungen die Festigkeit des Blechkörpers erhöht. Darüber hinaus wird eine ebene Schraubenkopfauflage geschaffen, die es ermöglicht, die Schraubendurchgangsbohrungen radial weiter nach innen als bisher anzuordnen, und zwar bis in den Bereich der elastomeren Dichtstreifen. Der Schraubenkopf liegt dann axial hinter der statischen Dichtung beziehungsweise dem Dichtstreifen, dadurch kann beim Festziehen der Schrauben der Übergangsbereich zwischen erster und zweiter Radialfläche nicht deformiert werden.

Vorzugsweise ist das Zusatzblech auf der Seite der Bodenfläche angeordnet, die dem abzudichtenden Gehäuse zugekehrt ist. Dies ermöglicht eine einfache Blechkörper-Ziehkontur, da auf eine zusätzliche Abstufung zur Aufnahme des Dichtstreifens verzichtet werden kann. Die erste Radialfläche wird nunmehr durch das Zusatzblech gebildet, während die Bodenfläche des Blechkörpers als zweite Radialfläche fungiert, an der die statische Dichtung (Dichtstreifen) anvulkanisiert ist. Der funktionstechnisch notwendige Freiraum für den Dichtstreifen entsteht durch die besondere Anordnung des Zusatzbleches.

Einem weiteren Gedanken der Erfindung gemäß, ist das Zusatzblech am Außenumfang des profilgezogenen Blechkörpers angeordnet und ist durch segmentweises Umbiegen entlang einer Falzlinie auf die Bodenfläche auflegbar. Auf diese Weise kann das Zusatzblech bereits am Blechkörperrohling angeformt sein, so daß beim Profilziehen die gewünschte Anordnung des Zusatzbleches eingestellt werden kann.

Alternativ besteht die Möglichkeit, das Zusatzblech als separates Bauteil auszubilden, welches erst nach dem Profilziehen mit dem Blechkörper verbunden wird. Um eine gleichmäßige Anlage am abzudichtenden Gehäuse zu erzeugen, ist es vorteilhaft, daß sich das Zusatzblech in Umfangsrichtung entlang der gesamten Dichtstreifenlänge erstreckt. Vorzugsweise sollte die Dicke des Zusatzbleches mindestens der Blechkörperdicke entsprechen.

Darüber hinaus ist es von Vorteil, daß sich das Zusatzblech in radialer Richtung bis zum statischen Dichtstreifen erstreckt. Hierdurch besteht die Möglichkeit, die statische Dichtung als Befestigungsmittel zu benutzen, indem beim Vulkanisieren das Zusatzblech mit dem Boden des Blechkörpers über das eingespritzte Elastomermaterial verbunden wird.

Die Erfindung ist in der Zeichnung dargestellt und wird im folgenden näher erläutert. Es zeigen:
Figur 1 Vorderansicht eines erfindungsgemäßen Gehäuseverschlußdeckels
Figur 2 einen Schnitt II - II gemäß Figur 1
Figur 3 alternative Ausbildung gemäß Figur 2
Figur 4 Vorderansicht eines alternativen Gehäuseverschlußdeckels
Figur 5 Seitenansicht gemäß Schnitt V - V der Figur 4
Figur 6 einen Schnitt VI - VI gemäß Figur 4
Figur 7 Querschnitt im Halbschnitt eines bekannten Gehäuseverschlußdeckels

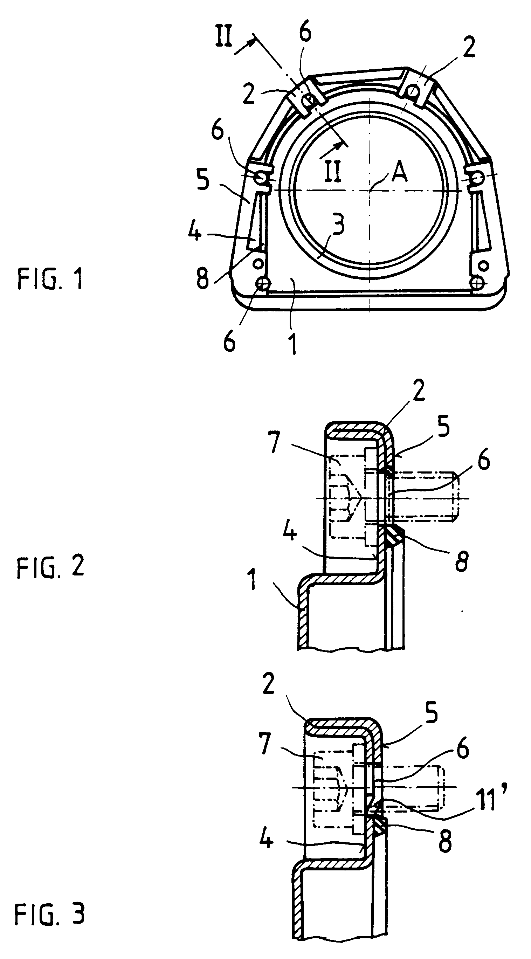

Die Figuren 1 bis 6 zeigen einen Gehäuseverschlußdeckel zur Abdichtung eines Kurbelwellengehäuses eines Kfz-Motors.

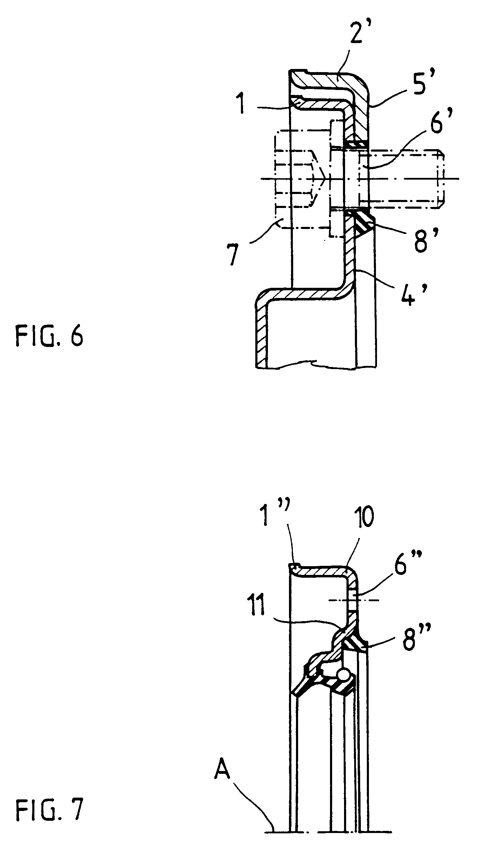

Die Figur 7 zeigt einen bisher bekannt gewordenen profilgezogenen Gehäuseverschlußdeckel, der sich aufgrund seiner Konstruktion nicht für den Einbau bei Motoren mit radial engem Bauraum eignet. Der Radialabstand zwischen Achse A und Schraubendurchgangsbohrung (6'') kann nicht verkürzt werden, da die Schraubendurchgangsbohrung (6'') nicht weiter radial nach innen verlegt werden kann. Die Befestigungsschraube benötigt eine ebene Schraubenkopfauflage, damit das relativ dünne Blech (10) sich nicht deformiert, wenn die Schraube auf dem Übergangsbereich (11) aufliegt.

Um dieses Problem zu vermeiden, wurde bei dem Blechkörper (1) gemäß Figur 1 am Außenumfang ein Zusatzblech (2) angeordnet, welches einstückig mit dem Blechkörper (1) verbunden ist. Der Blechkörper (1) weist axial zueinander versetzt angeordnete Radialflächen (3,4,5) auf. Die als Bodenfläche des topfförmigen Blechkörpers ausgebildete Radialfläche (4) weist mehrere Schraubendurchgangsbohrungen (6) auf. Das Zusatzblech (2) wird durch Umbiegen entlang einer Falzlinie auf die Bodenfläche des Blechkörpers (1) gepreßt. Die Form des Zusatzbleches (2) ist so ausgelegt, daß die Schraubendurchgangsbohrungen (6) nicht abgedeckt sind. Durch Umbiegen des Zusatzbleches wird eine Radialfläche (5) gebildet, welche stufenförmig zur Radialfläche (4) am abzudichtenden Gehäuse (nicht gezeichnet) anliegt.

Die Figur 2 verdeutlicht die Lage der Befestigungsschraube (7) auf der Bodenfläche (4). Durch die besondere Anordnung des Zusatzbleches (2) wird eine ebene Schraubenkopfauflage erzeugt, die es ermöglicht, den Blechkörper (1) deformationsfrei gegen das abzudichtende Gehäuse zu pressen. Das Zusatzblech (2) erzeugt den funktionsnotwendigen Versatz zwischen Radialfläche (5) und Radialfläche (4). Beim Anziehen der Schraube (7) kann der Dichtstreifen (8) radial ausweichen. Insgesamt kann auf diese Weise der Radialabstand zwischen Gehäuseverschlußdeckelachse (A) und Schraubendurchgangsbohrung (6) geringer als beim Stand der Technik (Fig. 7) ausgeführt werden, da die gesamte Bodenfläche (4) als ebene Radialfläche zur Verfügung steht.

Wie aus der Figur 2 ersichtlich, kann der Dichtstreifen (8) in axialer Richtung unter dem Schraubenkopf angeordnet sein, mit anderen Worten, die Schraubendurchgangsbohrung (6) kann unmittelbar an den Dichtstreifen (8) angrenzen mit der Folge, daß sich der Axialabstand etwa auf den Axialabstand zwischen Dichtstreifen (8) und Gehäusedeckelachse einstellen läßt.

In der Darstellung gemäß Figur 3 wurde das Zusatzblech (2) auf die Seite der Radialfläche (5) geklappt, die dem Schraubenkopf zugekehrt ist. Bei dieser Ausbildung muß der Blechkörper eine Sicke (11') zur Aufnahme des Dichtstreifens (8) aufweisen. Durch Umklappen des Zusatzbleches (2) wird auf der Schraubenkopfseite der durch die Sicke (11') gebildete Versatz ausgeglichen.

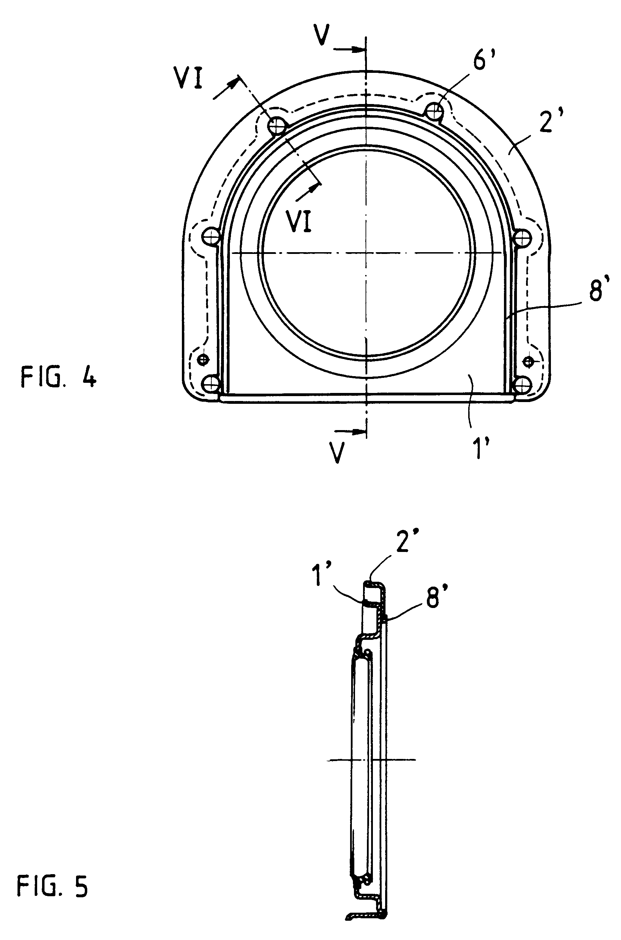

Die Figur 4 zeigt einen alternativen Gehäuseverschlußdeckel, bei dem das Zusatzblech (2') als separates Bauteil nach dem Profilziehen mit dem Blechkörper (1') verbunden ist.

Die Verbindung beider Blechkörper (1',2') erfolgt über der unmittelbar am Endbereich des Zusatzbleches (2') angeformte Dichtung (8') (Figuren 5 und 6). Über eine Variation der Blechdicke des Zusatzbleches (2') läßt sich der funktionstechnisch notwendige Versatz zwischen Dichtfläche (4') und Radialfläche (5') einstellen. Das Zusatzblech (2') erstreckt sich über den Umfang des Blechkörpers (1'), so daß die Ränder der Schraubendurchgangsbohrungen (6') abgedeckt sind.

## Patentansprüche

1. Gehäuseverschlußdeckel mit einer im Einbauzustand durch den Deckel sich erstreckenden Welle, insbesondere für Kurbelwellen- oder Getriebegehäuse von Kfz-Motoren, bestehend aus einem profilgezogenen Blechkörper mit im wesentlichen topfförmigem Querschnitt, dessen Bodenfläche (4, 4') zwei axial zueinander versetzt angeordnete Radialflächen (4, 4', 5, 5') aufweist, wobei zur Verbindung mit dem abzudichtenden Gehäuse in der ersten Radialfläche (4, 4') Schraubendurchgangsbohrungen (6, 6') angeordnet sind und die stufenförmig dagegen versetzt angeordnete zweite Radialfläche (5, 5') zur Aufnahme eines anvulkanisierbaren, statisch wirkenden Dichtstreifens (8, 8') dient, sowie bestehend aus einer dynamischen Lippendichtung für die Welle, dadurch gekennzeichnet, daß auf der Bodenfläche (4, 4') des Blechkörpers (1, 1') mindestens im Bereich der Schraubendurchgangsbohrungen (6, 6') ein die Bohrungsränder abdeckendes Zusatzblech (2, 2') angeordnet ist, welches mit dem Blechkörper (1, 1') verbunden ist und dessen Dicke dem axialen Versatz der Radialflächen entspricht, derart, daß eine ebene Schraubenkopfauflage und der Versatz zwischen den Radialflächen (4, 4', 5, 5') gebildet ist.

2. Gehäuseverschlußdeckel nach Anspruch 1, dadurch gekennzeichnet, daß das Zusatzblech (2, 2') auf der Seite der Bodenfläche (4, 4') angeordnet ist, die im montierten Zustand dem Schraubenkopf zugekehrt ist.

3. Gehäuseverschlußdeckel nach Anspruch 1, dadurch gekennzeichnet, daß das Zusatzblech (2, 2') auf der Seite der Bodenfläche (4, 4') angeordnet ist, die im montierten Zustand am abzudichtenden Gehäuse anliegt.

4. Gehäuseverschlußdeckel nach den Ansprüchen 1 bis 3, dadurch gekennzeichnet, daß das Zusatzblech (2) am Außenumfang des profilgezogenen Blechkörpers (1) segmentiert angeformt und durch Umbiegen entlang von Falzlinien auf die Bodenfläche (4) des Blechkörpers (1) umklappbar ist.

5. Gehäuseverschlußdeckel nach den Ansprüchen 1 bis 3, dadurch gekennzeichnet, daß das Zusatzblech (2') ein separates Bauteil ist.

6. Gehäuseverschlußdeckel nach mindestens einem der Ansprüche 1 bis 5, dadurch gekennzeichnet, daß das Zusatzblech (2, 2') in Umfangsrichtung sich über die gesamte Dichtstreifenlänge erstreckt.

7. Gehäuseverschlußdeckel nach mindestens einem der Ansprüche 1 bis 6, dadurch gekennzeichnet, daß die Dicke des Zusatzbleches (2, 2') mindestens der Blechkörperdicke entspricht.

8. Gehäuseverschlußdeckel nach mindestens einem der Ansprüche 1 bis 7, dadurch gekennzeichnet, daß das Zusatzblech (2, 2') sich in radialer Richtung bis zum statischen Dichtstreifen (8, 8') erstreckt.

9. Gehäuseverschlußdeckel nach mindestens einem der Ansprüche 1 bis 8, dadurch gekennzeichnet, daß das Zusatzblech mittels des statischen Dichtstreifens (8, 8') beim Anvulkanisieren mit dem Boden des Blechkörpers (1, 1') verbunden ist.

## Claims

1. Casing closure lid with a shaft extending when installed through the lid, particularly for crankshaft or gear casings of motor vehicle engines, comprising a profile-drawn sheet metal body with a substantially cup-shaped cross-section. whose base surface (4, 4') has two radial surfaces (4, 4', 5, 5'), and the second radial surface (5, 5') offset in a stepped manner thereto, serves to receive a statically-acting seal strip (8, 8') which may be vulcanised on, also comprising a dynamic lip seal for the shaft, characterised in that there is located on the base surface (4, 4') of the sheet metal body (1, 1') at least in the region of the screw holes (6, 6'), an additional plate (2, 2') covering the edges of the bores, and whose thickness corresponds to the axial degree of offsetting of the radial surfaces, and which is connected to the sheet metal body (1, 1') in such a way that a planar screw head support surface and the offsetting between the radial surfaces (4, 4', 5, 5') is formed.

2. Casing closure lid according to Claim 1, characterised in that the additional plate (2, 2') is located on the side of the base surface (4, 4') which when installed faces the screw head.

3. Casing closure lid according to Claim 1, characterised in that the additional plate (2, 2') is located on the side of the base surface (4, 4') which, when installed, abuts against the casing to be sealed.

4. Casing closure lid according to Claims 1 to 3, characterised in that the additional plate (2) is integrally formed in a segmented manner on the outer periphery of the profile-drawn sheet metal body (1), and may be folded by being bent along fold lines on to the base surface (4) of the sheet metal body (1).

5. Casing closure lid according to Claims 1 to 3, characterised in that the additional plate (2') is a separate component.

6. Casing closure lid according to at least one of Claims 1 to 5, characterised in that the additional plate (2, 2') extends in the peripheral direction over the entire length of the seal strip.

7. Casing closure lid according to at least one of Claims 1 to 6, characterised in that the thickness of the additional plate (2, 2') corresponds at least to that of the sheet metal body.

8. Casing closure lid according to at least one of Claims 1 to 7, characterised in that the additional plate (2, 2') extends in a radial direction as fas as the static seal strip (8, 8').

9. Casing closure lid according to at least one of Claims 1 to 8, characterised in that the additional plate is connected during vulcanising by means of the static seal strip (8, 8') to the base of the sheet metal body (1, 1').

## Revendications

1. Couvercle de fermeture de carter ayant un arbre s'étendant à l'état monté à travers le couvercle, en particulier pour carter d'arbre en vilebrequin ou de transmission d'un moteur à combustion interne constitué d'un corps de tôle profilé par filage ayant une section transversale essentiellement en forme de pot, dont la surface de fond (4, 4') présente deux surfaces radiales (4, 4', 5, 5') disposées axialement décalées l'une par rapport à l'autre, des alésages de passage de vis (6, 6') étant disposées dans la première surface radiale (4, 4') pour la liaison avec le carter à étanchéifier et la deuxième surface radiale (5, 5') disposée en gradin de manière décalée servant à la réception d'une bande d'étanchéité (8, 8') agissant de manière statique et pouvant être vulcanisée, ainsi que constituée d'une garniture d'étanchéité à lèvre dynamique pour l'arbre, caractérisé en ce que sur la surface de fond (4, 4') du corps de tôle (1, 1'), au moins dans la zone des alésages de passage de vis (6, 6'), il est disposé une tôle additionnelle (2, 2') recouvrant les bords d'alésages, qui est reliée ou corps de tôle (1, 1') et dont l'épaisseur correspond au décalage axial des surfaces radiales, de telle sorte qu'un appui plan pour la tête de vis et le décalage entre les surfaces radiales (4, 4', 5, 5') sont formés.

2. Couvercle de fermeture de carter selon la revendication 1, caractérisé en ce que la tôle additionnelle (2, 2') est disposée sur le côte de la surface de fond (4, 4') qui, à l'état monté, est tourné vers la tête de vis.

3. Couvercle de fermeture de carter selon la revendication 1, caractérisé en ce que la tôle additionnelle (2, 2') est disposée sur le côte de la surface de fond (4, 4') qui, à l'état monté, appuie contre le carter à étanchéifier.

4. Couvercle de fermeture de carter selon les revendications 1 à 3, caractérisé en ce que la tôle additionnelle (2) est formée de manière segmentée sur la périphérie extérieure du corps de tôle (1) profilé par filage et est rabattable par pliage le long de lignes de pliage sur la surface de fond (4) du corps de tôle (1).

5. Couvercle de fermeture de carter selon les revendications 1 à 3, caractérisé en ce que la tôle additionnelle (2') est une pièce de montage séparé.

6. Couvercle de fermeture de carter selon au moins une des revendications 1 à 5, caractérisé en ce que la tôle additionnelle (2, 2') s'étend dans la direction périphérique sur la totalité de la longueur de la bande d'étanchéité.

7. Convercle de fermeture de carter selon au moins une des revendications 1 à 6, caractérisé en ce que l'épaisseur de la tôle additionnelle (2, 2') correspond au moins à l'épaisseur du corps de tôle.

8. Couvercle de fermeture de carter selon au moins une des revendications 1 à 7, caractérisé en ce que la tôle additionnelle (2, 2') s'étend en direction radiale jusqu'à la bande d'étanchéité statique (8, 8').

9. Couvercle de fermeture de carter selon au moins une des revendications 1 à 8, caractérisé en ce que la tôle additionnelle est reliée au moyen de la bande d'étanchéité statique (8, 8'), lors de la vulcanisation, avec le fond du corps de tôle (1, 1').
